(19)

Europäisches
Patentamt
European
Patent Office
Office européen
des brevets

(11) **EP 3 026 405 A1**

(12) **EUROPEAN PATENT APPLICATION**

(43) Date of publication:
**01.06.2016 Bulletin 2016/22**

(51) Int Cl.:
*G01H 1/00* *(2006.01)*  *G01N 29/00* *(2006.01)*

(21) Application number: **14195294.5**

(22) Date of filing: **27.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Abion LLC**
**Cocoa Beach, FL 32932 (US)**

(72) Inventor: **Workman, Michael George**
**Cocoa Beach, FL 32932 (US)**

(74) Representative: **McQueen, Andrew Peter**
**Miltons IP**
**c/o Oslo Patentkontor AS**
**P.O. Box 7007M**
**0306 Oslo (NO)**

(54) **Android device to detect concealed items in an automobile**

(57)     An Android mobile device to detect concealed items in an automobile by measuring vibration. The mathematical formula frequency of vibration uses the mass M which affects the vibration. As mass of solid surface changes, so does the vibration. If difference in the vibration is detected between the inspected vehicle and empty vehicle that is the Normal Frequency, it may indicate concealed items. The Android device contains components needed to implement this invention. An accelerometer. A vibrator. A touch screen display. A computer operating system, Android, that runs Android Java software. SQLite, a computer database. A computer network connection to the internet using a wireless network. A sensor to provide the latitude and longitude location of the device during testing, through GPS, GLONASS, or NETWORK. The device also provides an electrical power source using the device battery, wall outlet electricity, or automobile charging cable connected to an automobile.

Figure 1

**Description**

Background - Prior Art

The following is a tabulation of some prior art that presently appears relevant:

|  | U.S.A. Patents | |
|---|---|---|
| Patent Number | Issue Date | Patentee |
| 5,068,883 | November 26, 1991 | DeHaan, et al. |
| 8,428,217 | April 23, 2013 | Peschmann |
| 8,054,203 | November 8, 2011 | Breed, et al. |
| 5,449,864 | September 12, 1995 | Beatty, et al. |

BACKGROUND OF THE INVENTION

This invention provides a means to identify if there are concealed items in an automobile. Automobiles are often used for transporting illegal and contraband materials such as illegal drugs, cash from illegal activities, untaxed goods, counterfeit goods, and other contraband. Automobiles can also be used as weapons when explosive materials are hidden within them. This invention provides a means to identify if there are concealed items within an automobile, and provides advantages over the prior art.

Several methods use radiation to examine a vehicle and determine if there are hidden materials. One system uses dual energy X-ray CT scanning to examine objects and determine what kinds of materials are within the objects, including objects that are vehicles. The disadvantages of this system is that the apparatus to generate the dual energy is large and not readily mobile, and requires considerable effort to move from one location to another. Also this system requires a large and significant source of electricity to power the dual energy X-ray generating devices that are used to examine the objects. The dual energy X-ray radiation also poses a health risk to persons who may be exposed to it, so that it cannot be used to examine a vehicle if there are persons within the vehicle.

Another method uses a first substructure and a second substructure and the vehicle must be positioned between the substructures, and then ultrasonic sound is used to examine the vehicle and determine if there are objects within the vehicle. The disadvantage of this method is that it requires two separate structures that the vehicle must be driven between and the substructures themselves are not readily mobile and easy to carry by a single person.

One method used to detect contraband uses Infrared Light to examine a vehicle and detect certain analytes of material, Analyte Detection with Infrared Light. The infrared light is tuned to excite certain kinds of particles so that it can be configured to detect certain materials, such as those contained within explosive substances. To examine an entire vehicle at one time, requires a large number of infrared light sources as part of a large apparatus. The method is not readily mobile. Also this method cannot be used to determine if there are materials hidden within the hollow cavities of an automobile, such as the hollow space within the door of an automobile, where infrared light cannot penetrate without dismantling the door.

Another method, Vehicle Security Inspection System, uses a large apparatus and a conveyer belt that the vehicle is driven upon and then the conveyer belt is used to ferry the automobile past sensors of different types to detect contraband within the automobile. The permanent installation version of this method is large and not readily moveable from one location to another. A conveyer belt large enough to transport and carry an entire automobile cannot be carried by a single person from one location to another.

One method, Motor Vehicle Screening Apparatus and Method, relies on large, heavy machines to weigh the vehicle and compare the weight of the vehicle to that of an empty vehicle of the same type, to determine if the vehicle has additional materials in it. This is a large machine not readily moveable and takes a significant amount of time to prepare and deploy. The method uses an apparatus that is not readily mobile, and cannot be moved from one location to another by a single person.

Also, all of these methods do not automatically come with a connection to the internet that allows the methods to retrieve and send data to a central computer server connected to the internet. A significant effort would be required to setup these methods to report the results of their deployment and usage to a central computer server connected to the internet. Most Android devices contain at least one means of connecting to the internet, and many have multiple means to connect to the internet.

SUMMARY OF THE INVENTION

The object of this invention is to provide a Device to determine if there are concealed items within an automobile, or vehicle. It uses an Android mobile device, a device that runs the Android operating system such as an Android Telephone or Android Tablet Computer, and Android device components to implement the Device, and a custom software application that runs on and controls the Android device. Some examples of Android devices include the Motorola line of smart phones, Samsung Galaxy line of phones, the HTC One Android phone, LG Android phones, and also tablet computers using the Android operating system such as those made by Samsung, Sony, and Onda.

By measuring the frequency of vibration with which a surface of the automobile vibrates, and comparing it to the frequency of vibration for that particular kind of automobile when it is empty of hidden materials, it can be determined if there are hidden materials within the automobile. The mass of an object affects the frequency of vibration, when an automobile has hidden materials within it, it adds mass to the automobile and causes the frequency of vibration of different surfaces of the automobile to change.

Many Android devices contain all of the necessary components to implement this invention, A computer processor chip and memory chips that allow a computer operating system and software to run on the device. An accelerometer, an electronic device that measures vibration and motion. A vibrator that cause the Android device to vibrate. A computer operating system, Android, that manages the components of the Android device and allows for the development of custom software using the Android Java programming language. SQLite, a computer database library that allows for the storage and retrieval of data using a software application. A touch screen display that allows the Android device user to control the Android device and software that runs on it. A Global Positioning System (GPS) sensor that allows the latitude and longitude location of the Android device to be determined. Some Android devices also use the GLONASS global location system to get latitude and longitude. A connection to the internet using the cellular communications network the Android device uses, and/or a connection to the internet using a wireless internet router, known as WiFi. The means of connection to the internet can also provide the Latitude and Longitude location of the device through Google Maps, which tracks latitude and longitude of network routers and cellular towers. A battery that serves as the source of electricity for all of the components within the Android device, and also the Android device can be connected to a wall outlet source of electricity, and/or an automobile electricity source device charging cable.

The Android device is small and lightweight, and can be transported by a single person without difficulty. It also has a battery that allows for the Android device to be used for several hours when fully charged, without the need of being plugged in to a wall outlet source of electricity and/or other source of electricity such as an automobile.

This invention is implemented using the Android device by the following steps (a) Data about the automobile being inspected is entered into the Android device using the touch screen of the Android device (b) a long side of the device is placed against the part of the automobile being inspected (c) User presses a button on the touch screen of the device that causes the device to vibrate and apply energy to the surface of the automobile, and cause that surface to vibrate (d) The accelerometer contained within the device measures the vibration (e) The custom device software compares the vibration frequency during the test of the automobile, the test frequency, to that of the vehicle when it is empty of concealed items, the normal frequency of vibration. and determines if there is a significant difference, that may indicate concealed materials (f) A simple PASS or FAIL message is displayed to the user depending on the results of the comparison (g) The results of the test are stored by the application software in a computer database on the Android device and reported by web service to the central internet server, where the deployment of this Device across a geographic area can be monitored from a central location.

BRIEF DESCRIPTION OF THE DRAWINGS

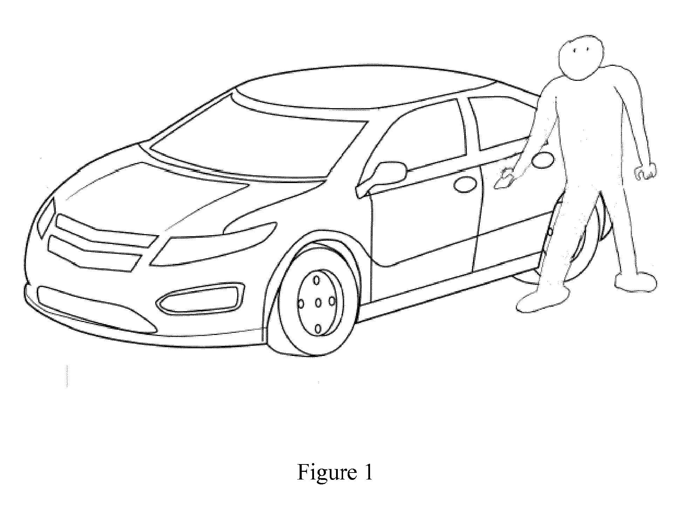

Figure 1 - a drawing showing how the device is used to test an automobile for concealed items
Figure 2 - an outline of an Android mobile device and it's list of components used by this invention
Figure 3 - a flowchart showing the process for obtaining Normal Frequencies of Vibration
Figure 4 - a flowchart that shows the basic operation of the invention
Figure 5 - a flowchart showing the decision process while testing the automobile for concealed items

DETAILED DESCRIPTION OF THE INVENTION

Solid surfaces, including surfaces of metal, vibrate with a frequency of vibration when energy is applied to that surface, such as a tap or strike with another solid object. The following mathematical formula shows how the exact frequency of vibration, fin, is determined, the formula uses the number value K, the elastic constant, and the mass of the object, M, to determine the exact frequency of vibration. When K stays the same for the particular surface but mass M changes, the frequency of vibration also changes. Thus changes in mass of an object also cause changes in the frequency of vibration of that particular object. This is the basis of this invention and how it is used to determine if there are concealed materials within an object, when the object is an automobile.

$$f_n = \frac{1}{2\pi}\sqrt{\frac{K}{M}}$$

By applying energy to the surface of an automobile, and causing that surface to vibrate, then measuring the frequency of vibration, and then comparing that frequency of vibration to the known frequency of vibration for that automobile when the automobile is empty of concealed items, it can be determined if there are concealed items within the automobile. Most automobiles contain hollow cavities where items can be hidden, such as the hollow cavity between the outside surface of an automobile door and the inside surface of that automobile door, hidden items in this hollow cavity affect the mass M of the surface of the door, causing it to vibrate with a different frequency than when that hollow cavity is empty. The same process can be applied to other parts of the automobile. Also, when a significant object of a certain size is contained anywhere within the automobile, it will affect the frequency of vibration of all surfaces of the automobile. This is the basis of this Device and how it uses vibration to determine if there are hidden materials within an automobile.

Many Android mobile devices provide all of the components needed to implement this invention. The components are listed here. A computer processor chip and computer memory chips. An accelerometer electronic hardware component. An electronic vibrator hardware component. A touch screen interface. A computer operating system. A computer database. A global positioning system (GPS) or GLONASS sensor. Electronic components that connect to the internet through cellular communications network. Electronic components that connect to the internet through a wireless internet router, or Wifi. A custom software application that allows the user of the Android device to examine an automobile and determine if there are concealed items within the automobile by comparing the vibration value of the surface of an automobile, the test frequency, to the known vibration value, the normal frequency, of an automobile free of contraband and hidden materials.

The Android mobile device contains a computer processor chip and computer memory chips that allow for software to operate on the device and manage all of the components of the device.

The Android device has a computer operating system software installed on it called Android that provides for many features on the device, including the management of the components of the device, making device calls, sending text messages, allowing for users to interact with the operating system using a touch screen interface, the Graphical User Interface (GUI), and allows for the running of custom software applications that are written using the Android Java programming language, a derivative of the Java programming language. Android operating system is a derivative of the Linux computer operating system, but is customized to work with the many hardware components of an Android Device. Android Java software for the Android device can be created using the Eclipse development environment and the Android Developer Tools which are provided by Google, Inc. and also through development environments made by various other companies.

The Android device contains an accelerometer, an electronic sensor that measures vibration. This electronic component can be accessed using Android Java software. The rate of vibration measured by the accelerometer can be read by the software and stored in a variable to be used within the software, and also stored in a database on the Android Device. Most Android devices contain an accelerometer.

The Android device contains an electronic vibrator that causes the Android device to vibrate. Most Android devices contain an electronic vibrator. Normally this is used to put the Android device in a "silent" mode so that the device does not make a noise when receiving an incoming call or incoming text message, instead the device vibrates. Also many software games for Android devices use the electronic vibrator This electronic component can be accessed and controlled using Android Java software. It can be used to apply energy to the surface of an automobile and cause the surface of the automobile to vibrate.

The Android device contains a touch screen interface which allows the user to interact and control the Android device. Screens, or Activities, can be developed using Android Java and Extensible Markup Language (XML) and customized to work with software running on the Android device.

The Android device contains a database library called SQLite, which allows for the creation of computer databases which are accessed and controlled using the Structured Query Language (SQL) computer language. SQLite databases allow for the storage and retrieval of computer data and can be implemented using the Android Java programming language.

Most Android devices also contain a sensor that can determine the Latitude and Longitude location of the Android device using the GPS or GLONASS Satellite network. Data from this GPS or GLONASS sensor can be accessed using Android Java software. Also this invention could also work with Android devices that do not have GPS or GLONASS to get the Latitude and Longitude location of the device, those devices can instead get their location from the connection to the internet using the Google Maps system, which identifies the location by way of the known location of internet routers and cellular network towers near the device.

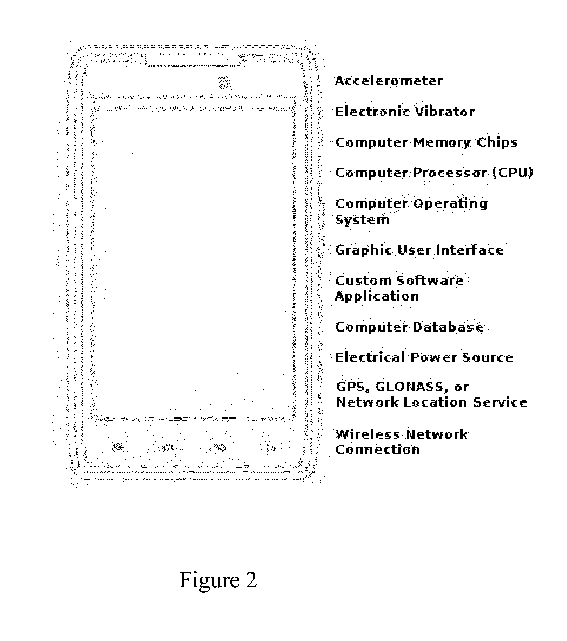

Many Android device contains components that allow it to connect to the internet through the cellular communications network that handles device calls and text messages coming from and going to an Android device. For Android devices that do not have cellular network connectivity, that feature can be added to the device through the use of attachments that connect to the cellular network and plug in to the USB port of the device, so called "Dongles". Many Android devices can also connect to the internet through a wireless internet router where such a router is available and within proximity of the Android device. This is often referred to as WiFi. Data can be sent and retrieved from the internet using Android Java software. The list of components of this invention are summarized in Figure 2 of the drawings, along with the outline of an Android Device, The Motorola Droid smartphone.

Before this Device can be used to determine if hidden materials are contained within an automobile, a database must be built that contains the vibration values of empty automobiles to be used as the Normal Frequencies of Vibration for comparisons. Apart of this invention allows for this task to be done.

The vibration frequency measurement of an automobile empty of concealed items is called the Normal Frequency. A Normal Frequency applies to a type of automobile and part of the automobile. The Normal Frequency can be the empty vehicle vibration frequency measurement for an automobile door. The normal frequencies are stored in the Android device computer database and also on a server computer that can be accessed through the Android Device network connection, if a connection is available.

The data used by this invention and stored in the Android Device database consists of the following at a minimum:

NORMALFREQUENCY data

Fields:

MANUFACTURER, a text field containing the name of the automobile Manufacturer/Make (optional)
MODEL, a text field containing the model of a car (optional)
TYPE, a text field containing the type of automobile (car, sport utility vehicle, van, or truck)
PART, a text field containing the auto part (door,bumper,quarter panel, trunk,fuel tank, dashboard)
NORMALFREQUENCY, a real field that stores a floating point number, for the frequency of vibration.

ASSIGNMENTINFO data

Fields:

KEYID, a randomly generated string of data used to be the unique identifier of a single device

VARIANCE data

Fields:

VARIANCE, a number to be used as the natural variance of vibration values

TESTS data

Fields:

DATETIME, text field, the data and time of the test of the automobile
LATITUDE, number, latitude location of the device during auto test
LONGITUDE, number, longitude location of the device during auto test
MANUFACTURER, text field, the manufacturer/make of the automobile being tested (optional)
MODEL, text field, the model of the automobile being tested
COLOR, text field, the color of the automobile being tested (optional)
TYPE, text field, the type of automobile being tested (car, sport utility vehicle, etc.)
PART, text field, the part of automobile being tested (bumper, door, etc.)
TESTFREQUENCY, number, the average vibration of the auto surface during the test
PASSFAIL, text field, the results of the test of the auto, either PASS or FAIL.

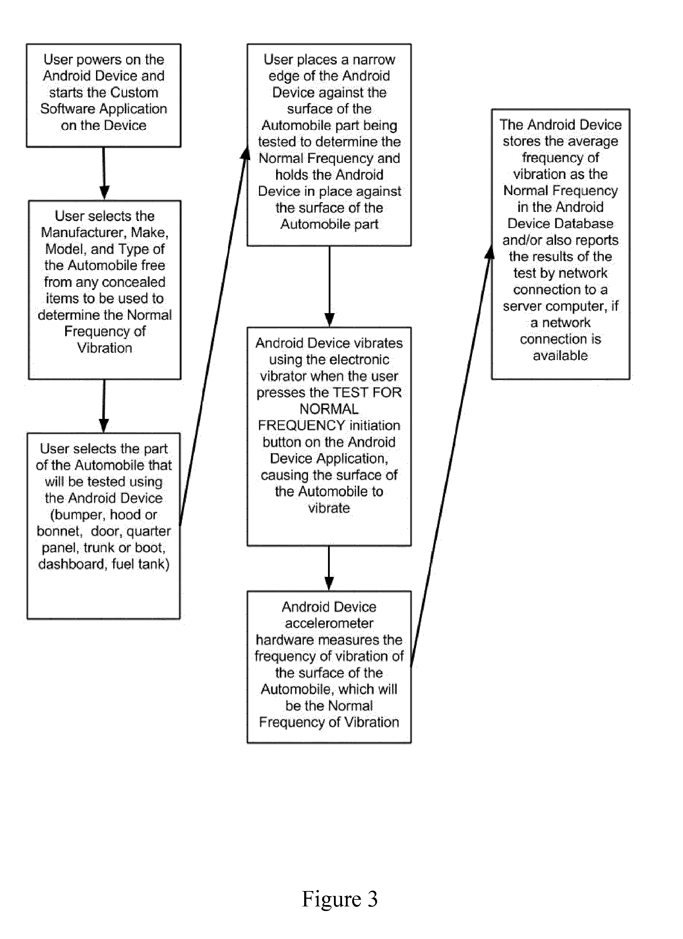

Before this invention can be effectively used, a database of the known Normal Frequencies of Vibration for automobiles that are free of concealed items must be built. This invention also provides the means to do this task in a similar fashion to testing for concealed items. It consists of the following steps which are summarized in a flowchart in Figure 3 of the drawings:

(1) Power on the Android Device and start the custom software application on the device.

(2) In the first screen of the software application, the user selects the Manufacturer/Make of the automobile from a user interface control, then clicks the continue button to go to the next screen. The manufacturer chosen is stored in the Android Device database.

(3) The next screen of the custom software application, the users selects the type of the automobile being tested, such as 2 door car, 4 door car, truck, sport utility vehicle, etc. The users selection is stored in the Android Device Database.

(4) The next screen of the custom software application, the user selects the part of the automobile being tested. Parts such as quarter panel, bumper, door, boot, trunk, bonnet, dashboard, and fuel tank. The users selection is stored in the Android Device database.

(5) The user is now at the screen of the custom software application where the automobile will be tested to get the Normal Frequency of Vibration. When this screen is opened, the accelerometer is initialized and ready to begin measuring vibration. On this screen of the application is a button titled INITIATE TEST FOR NORMAL FREQUENCY or similar words the user can understand. The user then takes the device and places a narrow edge against the surface of the automobile part being tested and holds the Android Device against the surface of the automobile. The user then clicks the button titled INITIATE TEST FOR NORMAL FREQUENCY on this screen. The Android Device then begins vibrating by way of its electronic vibrator hardware, while the device is vibrating, the average vibration value is is measured by the accelerometer hardware and stored as the Normal Frequency of Vibration, The user can stop holding the Android Device against the automobile surface once it stops vibrating.

(6) The custom software application stores the results of the test, including the Normal Frequency of Vibration, in the device database and/or also reports the results of the test and the data involved with the test to a server computer through the network connection, if a network connection is available. The server computer can then make the data available to other Android Devices for use in testing automobiles for concealed items.

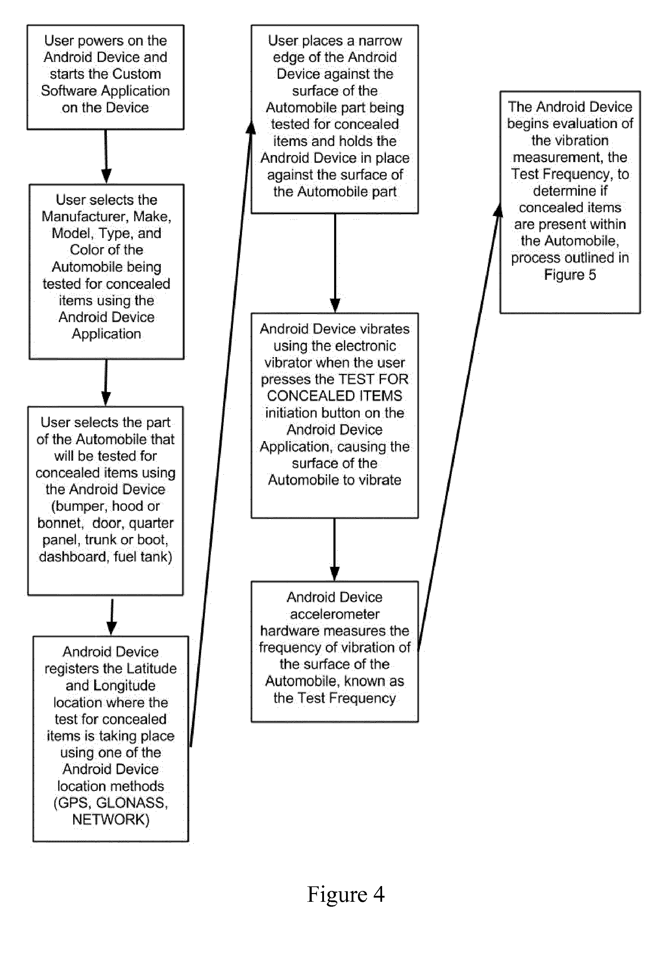

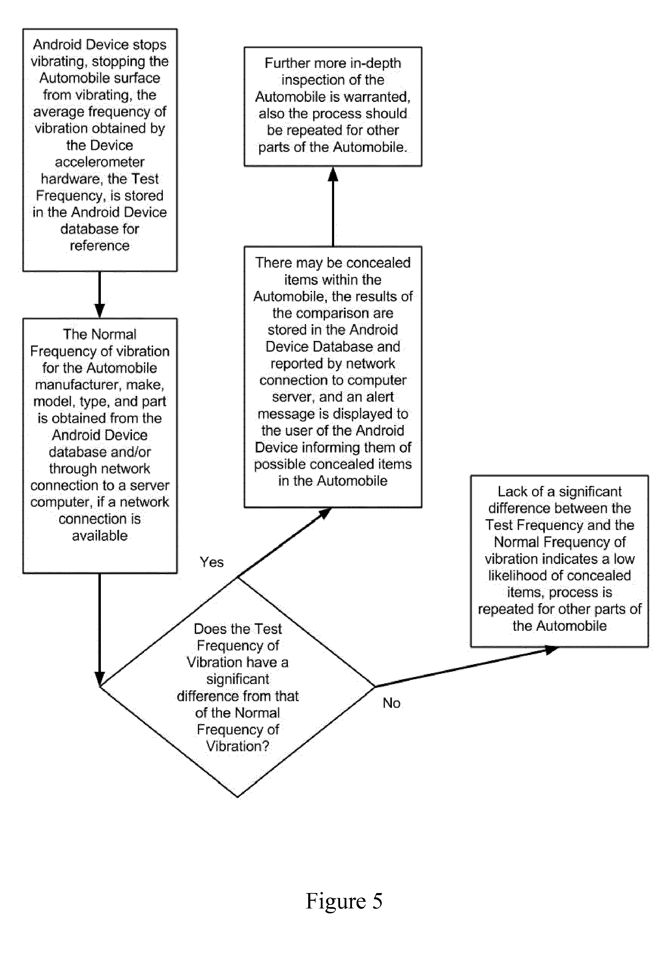

The detailed process using this invention to do a test of an automobile for the presence of concealed items is similar, composed of the following steps, which are summarized in flowcharts in Figure 4 and Figure 5 of the drawings:

(1) Power on the Android Device and start the custom software application on the device.

(2) In the first screen of the software application, the user selects the Manufacturer/Make of the automobile from a user interface control, then clicks the continue button to go to the next screen. The manufacturer chosen is stored in the Android Device database.

(3) The next screen of the custom software application, the user selects the Color of the automobile, then clicks the continue button to go to the next screen. The color chosen is stored in the Android Device database.

(4) The next screen of the custom software application, the users selects the type of the automobile being tested, such as 2 door car, 4 door car, truck, sport utility vehicle, etc. The users selection is stored in the Android Device Database.

(5) The next screen of the custom software application, the user selects the part of the automobile being tested. Parts such as quarter panel, bumper, door, boot, trunk, bonnet, dashboard, and fuel tank. The users selection is stored in the Android Device Database.

(6) The user is now at the screen of the custom software application where the actual test of the automobile will take place. When this screen is opened, the location sensor (GPS, GLONASS, NETWORK) is initialized and registers the latitude and longitude location of the device and where the automobile test is taking place. The accelerometer is also initialized and ready to begin measuring vibration. On this screen of the application is a button titled INITIATE TEST FOR CONCEALED ITEMS, or similar words the user can understand. The user then takes the device and places a narrow edge against the surface of the automobile part being tested and holds the Android Device against the surface of the automobile. The user then clicks the button titled INITIATE TEST FOR CONCEALED ITEMS on this screen. The Android Device then begins vibrating by way of its electronic vibrator hardware, while the device is vibrating, the average vibration value is measured by the accelerometer hardware and stored as the Test Frequency of Vibration, The user can stop holding the Android Device against the automobile surface once it stops vibrating.

(7) The custom software application compares the Test Frequency of Vibration to the Normal Frequency of Vibration for that type and part of automobile, stored in the Android Device database, or available from a server computer through network connection, taking into account the variance of vibrations, if a significant difference exists between the two, that may indicate the presence of concealed items in the automobile. A small amount of concealed material of say only 1 or 2 kilograms (2.2 or 4.4 pounds) may not affect the Test Frequency of Vibration, but a large amount of concealed materials, say 25 to 50 kilograms (55 pounds to 110 pounds) will have a significant affect on the Test Frequency of Vibration of the surface of the automobile, since Mass affects the frequency of vibration, so much so that it will be noticeably different than the Normal Frequency of Vibration for when an automobile is free of concealed items. The Android Device accelerometer hardware provides the means to determine the frequency of vibration. The Android Device electronic vibrator provides the means to apply energy to the surface of the automobile causing that surface to vibrate.

(8) The custom software application stores the results of the test in the device database and/or also reports the results of the test to a server computer through the network connection, if a network connection is available. This invention is designed to have its own database of Normal Frequency values so that it can operate in the event that there is no network connection through the cellular network or through a wireless router, "WiFi".

OTHER EMBODIEMENTS

This invention can be implemented using other kinds of mobile devices that do not run the Android operating system. Some devices made by Research In Motion (RIM), Inc. using the brand name of Blackberry also have all of the components needed to implement this Device. Also some devices that run the Windows mobile operating system from Microsoft also contain all of the components needed to implement this Device.

Also the process could also be used with different kinds of devices that measure vibration like a laser vibrometer, and different devices that apply energy to the surface of an automobile causing that surface to vibrate.

**Claims**

1.    A mobile device for detecting whether a vehicle contains a concealed item, the device comprising:

a vibrator for applying energy to a surface of the vehicle such that the surface is caused to vibrate,
an accelerometer for measuring the frequency of vibration ("test frequency of vibration") of the surface, and
means for comparing the test frequency of vibration to the normal frequency of vibration for the surface of a vehicle of the same model and type when the vehicle is empty of concealed items,

wherein a significant difference between the test frequency of vibration and the normal frequency of vibration indicates the presence of a concealed item within the vehicle.

2.    A device according to claim 1, wherein the device is a mobile Android device.

3.    A device according to claim 1 or claim 2, which comprises custom software for comparing the test frequency of vibration of the surface of the vehicle with the normal frequency of vibration of said surface held in a database, determining whether the test frequency of vibration is significantly different from the normal frequency of vibration, and indicating the result to the user.

4.    A method for detecting whether a vehicle contains a concealed item, the method comprising using a mobile device to:

(1) apply energy to a surface of the vehicle such that the surface is caused to vibrate,
(2) measure the frequency of vibration ("test frequency of vibration") of the surface, and
(3) compare the test frequency of vibration to the normal frequency of vibration for the surface of a vehicle of the same make, model and type when the vehicle is empty of concealed items,

wherein a significant difference between the test frequency of vibration and the normal frequency of vibration indicates the presence of a concealed item within the vehicle.

5.    A method according to claim 4, wherein the mobile device is a mobile phone or tablet computer.

6.    A method according to claim 5, wherein the mobile device uses the Android operating system.

7.    A method according to any of claims 4 to 6, wherein the vehicle is an automobile.

8.    A method according to claim 7, wherein the surface is the surface of an automobile part selected from quarter panel, bumper, door, boot, trunk, bonnet, dashboard and fuel tank.

9. A method according to claim 4, wherein the normal frequencies of vibration for surfaces are recorded in a database, classified according to vehicle make, model, type and part.

10. A method according to claim 9, wherein the database is stored on the mobile device.

11. A method according to claim 9, wherein the database is stored on a server computer which is accessed by the mobile device through a network connection.

12. A method according to claim 4, wherein the result of the test is reported to a server computer by the mobile device.

13. A method according to claim 12, wherein the report includes the latitude and longitude location of the vehicle.

14. Use of a mobile Android device to detect whether a vehicle contains a concealed item.

Figure 1

Accelerometer

Electronic Vibrator

Computer Memory Chips

Computer Processor (CPU)

Computer Operating System

Graphic User Interface

Custom Software Application

Computer Database

Electrical Power Source

GPS, GLONASS, or Network Location Service

Wireless Network Connection

Figure 2

User powers on the Android Device and starts the Custom Software Application on the Device

↓

User selects the Manufacturer, Make, Model, and Type of the Automobile free from any concealed items to be used to determine the Normal Frequency of Vibration

↓

User selects the part of the Automobile that will be tested using the Android Device (bumper, hood or bonnet, door, quarter panel, trunk or boot, dashboard, fuel tank)

User places a narrow edge of the Android Device against the surface of the Automobile part being tested to determine the Normal Frequency and holds the Android Device in place against the surface of the Automobile part

↓

Android Device vibrates using the electronic vibrator when the user presses the TEST FOR NORMAL FREQUENCY initiation button on the Android Device Application, causing the surface of the Automobile to vibrate

↓

Android Device accelerometer hardware measures the frequency of vibration of the surface of the Automobile, which will be the Normal Frequency of Vibration

The Android Device stores the average frequency of vibration as the Normal Frequency in the Android Device Database and/or also reports the results of the test by network connection to a server computer, if a network connection is available

Figure 3

User powers on the Android Device and starts the Custom Software Application on the Device

↓

User selects the Manufacturer, Make, Model, Type, and Color of the Automobile being tested for concealed items using the Android Device Application

↓

User selects the part of the Automobile that will be tested for concealed items using the Android Device (bumper, hood or bonnet, door, quarter panel, trunk or boot, dashboard, fuel tank)

↓

Android Device registers the Latitude and Longitude location where the test for concealed items is taking place using one of the Android Device location methods (GPS, GLONASS, NETWORK)

User places a narrow edge of the Android Device against the surface of the Automobile part being tested for concealed items and holds the Android Device in place against the surface of the Automobile part

↓

Android Device vibrates using the electronic vibrator when the user presses the TEST FOR CONCEALED ITEMS initiation button on the Android Device Application, causing the surface of the Automobile to vibrate

↓

Android Device accelerometer hardware measures the frequency of vibration of the surface of the Automobile, known as the Test Frequency

The Android Device begins evaluation of the vibration measurement, the Test Frequency, to determine if concealed items are present within the Automobile, process outlined in Figure 5

Figure 4

Android Device stops vibrating, stopping the Automobile surface from vibrating, the average frequency of vibration obtained by the Device accelerometer hardware, the Test Frequency, is stored in the Android Device database for reference

Further more in-depth inspection of the Automobile is warranted, also the process should be repeated for other parts of the Automobile.

The Normal Frequency of vibration for the Automobile manufacturer, make, model, type, and part is obtained from the Android Device database and/or through network connection to a server computer, if a network connection is available

There may be concealed items within the Automobile, the results of the comparison are stored in the Android Device Database and reported by network connection to computer server, and an alert message is displayed to the user of the Android Device informing them of possible concealed items in the Automobile

Lack of a significant difference between the Test Frequency and the Normal Frequency of vibration indicates a low likelihood of concealed items, process is repeated for other parts of the Automobile

Yes

Does the Test Frequency of Vibration have a significant difference from that of the Normal Frequency of Vibration?

No

Figure 5

Europäisches
Patentamt

European
Patent Office

Office européen
des brevets

# EUROPEAN SEARCH REPORT

Application Number

EP 14 19 5294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/004836 A1 (WORKMAN MICHAEL GEORGE [US]) 2 January 2014 (2014-01-02) * the whole document * | 1-14 | INV. G01H1/00 G01N29/00 |
| A | US 2009/072768 A1 (MURRAY MATTHEW J [US] ET AL) 19 March 2009 (2009-03-19) * abstract; figure 2 * * paragraphs [0001] - [0014] * | 1-14 | |
| A | US 2014/069195 A1 (LEDBETTER FINLEY LEE [US]) 13 March 2014 (2014-03-13) * abstract; figure 1 * * paragraphs [0001], [0009] - [0012] * | 1-14 | |
| A | US 2007/019839 A1 (FRANTZ ROBERT H [US]) 25 January 2007 (2007-01-25) * paragraphs [0009] - [0011], [0023] - [0035], [0048] - [0052]; figure 5 * | 1-14 | |
| | | | TECHNICAL FIELDS SEARCHED (IPC) G01N G01H |

The present search report has been drawn up for all claims

| Place of search | Date of completion of the search | Examiner |
|---|---|---|
| The Hague | 27 May 2015 | Vollmer, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 5294

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2015

| Patent document cited in search report | Publication date | Patent family member(s) | | Publication date |
|---|---|---|---|---|
| US 2014004836 A1 | 02-01-2014 | NONE | | |
| US 2009072768 A1 | 19-03-2009 | AT | 501796 T | 15-04-2011 |
| | | CN | 101827661 A | 08-09-2010 |
| | | EP | 2190593 A1 | 02-06-2010 |
| | | US | 2009072768 A1 | 19-03-2009 |
| | | WO | 2009038862 A1 | 26-03-2009 |
| US 2014069195 A1 | 13-03-2014 | US | 2014069195 A1 | 13-03-2014 |
| | | WO | 2014043391 A1 | 20-03-2014 |
| US 2007019839 A1 | 25-01-2007 | NONE | | |

EPO FORM P0459

For more details about this annex : see Official Journal of the European Patent Office, No. 12/82

**EP 3 026 405 A1**

**Patent documents cited in the description**

- US 5068883 A
- US 8428217 B
- US 8054203 B
- US 5449864 A